# EUROPEAN PATENT SPECIFICATION

(11) **EP 4 560 660 B1**
(45) Date of publication and mention of the grant of the patent: **18.11.2026**
(21) Application number: 24200036.2
(22) Date of filing: 12.09.2024
(51) Int. Cl.: H01G 4/008, H01G 4/012, H01G 4/12, H01G 4/30, H01G 4/232

(54) **MULTILAYER ELECTRONIC COMPONENT**
MEHRSCHICHTIGES ELEKTRONISCHES BAUTEIL
COMPOSANT ÉLECTRONIQUE MULTICOUCHE

(30) Priority: 21.11.2023 KR 20230162294
(43) Date of publication of application: 28.05.2025
(73) Proprietor: Samsung Electro-Mechanics Co., Ltd., Gyeonggi-do (KR)
(72) Inventor: Son, Min Jae, Suwon-si, Gyeonggi-do (KR); Chun, Eui Jung, Suwon-si, Gyeonggi-do (KR); Lee, Ho Jae, Suwon-si, Gyeonggi-do (KR); Park, Jae Sung, Suwon-si, Gyeonggi-do (KR)
(74) Representative: Grünecker Patent- und Rechtsanwälte PartG mbB

(56) References cited:
- EP-B1- 0 312 817
- CN-A- 105 513 794
- CN-B- 105 280 378
- JP-A- 2014 096 554
- KR-A- 20150 103 600
- KR-B1- 101 762 032
- US-A1- 2015 179 339
- US-A1- 2016 133 384

## Description

### CROSS-REFERENCE TO RELATED APPLICATION(S)

This application claims benefit of priority to Korean Patent Application No. 10-2023-0162294 filed on November 21, 2023, in the Korean Intellectual Property Office

### TECHNICAL FIELD

The present disclosure relates to a multilayer electronic component.

### BACKGROUND

A multilayer ceramic capacitor (MLCC), a multilayer electronic component, is a chip-type condenser mounted on the printed circuit boards of various types of electronic products, such as image display devices including a liquid crystal display (LCD) and a plasma display panel (PDP), computers, smartphones and mobile phones, and serves to charge or discharge electricity therein or therefrom.

The multilayer ceramic capacitor may be used as a component in various electronic devices due to having a small size, ensuring high capacitance and being easily mounted. With the miniaturization and high output power of various electronic devices such as computers and mobile devices, demand for miniaturization and high capacitance of multilayer ceramic capacitors has also been increasing.

Meanwhile, in a high voltage environment, an electrodistortion effect appears which may cause deformation of components due to voltage application, but this electrodistortion effect is concentrated in a central portion of the multilayer electronic component and may generate cracks. There is a need to design a structure that may prevent stress concentration to prevent such cracks from occurring.

US 2015/0179339 A1 discloses that when all internal electrodes or floating electrodes have a double-layer structure, the equivalent series resistance (ESR) characteristics and dielectric withstand voltage can be improved. However, US 2015/0179339 A1 does not disclose any teaching regarding the prevention of crack generation by alleviating electric field concentration in the case where the internal electrode or floating electrode has only a single double layer. Furthermore, it does not disclose any teaching that placing a dielectric layer with a different composition between double internal electrodes or double floating electrodes can improve the density, reduce pores, or enhance dielectric properties.

Additionally, EP 0 312 817 B1 discloses placing a glass layer between double internal electrodes to improve bondability. However, it does not disclose any teaching related to improving density to reduce pores or enhancing dielectric properties.

### SUMMARY

An aspect of the present disclosure is to disperse stress due to an electrodistortion effect.

An aspect of the present disclosure is to provide a multilayer electronic component having improved mechanical properties.

An aspect of the present disclosure is to provide a multilayer electronic component having improved capacitance characteristics.

However, the aspects of the present disclosure are not limited to the above-described contents, and may be more easily understood in the process of describing specific example embodiments of the present disclosure.

A multilayer electronic component according to an example embodiment of the present disclosure **includes:** a body including a plurality of first dielectric layers, an internal electrode including first and second internal electrodes spaced apart from each other on the same first dielectric layer, and floating electrodes alternately disposed with the internal electrode in a first direction with the first dielectric layer interposed therebetween; and first and second external electrodes disposed on the body and connected to the first and second internal electrodes, respectively, wherein the body includes a double internal electrode including bilayered internal electrodes disposed adjacently to each other in the first direction with a second dielectric layer interposed therebetween.

The multilayer electronic component according to the invention is defined by the features of claim 1 or 7.

A multilayer electronic component according tc another example embodiment of the present disclosure **includes:** a body including a plurality of first dielectric layers, an internal electrode including first and second internal electrodes spaced apart from each other on the same first dielectric layer, and floating electrodes alternately arranged with the internal electrode in a first direction with the first dielectric layer interposed therebetween; and first and second external electrodes disposed on the body and connected to the first and second internal electrodes, respectively, wherein the body includes a double floating electrode including bilayered floating electrodes disposed adjacently to each other in the first direction with a second dielectric layer interposed therebetween.

One of the various effects of the present disclosure is to prevent the generation of cracks by dispersing stress due to an electrodistortion effect.

One of the various effects of the present disclosure is to improve the mechanical properties of a multilayer electronic component.

One of the various effects of the present disclosure is to improve the capacitance characteristics of a multilayer electronic component.

However, advantages and effects of the present application are not limited to the foregoing content and may be more easily understood in the process of describing a specific example embodiment of the present disclosure.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an example embodiment of the present disclosure;
FIG. 2 is a schematic cross-sectional view taken along line I-I' of FIG. 1;
FIG. 3 schematically illustrates an enlarged view of region M of FIG. 2;
FIG. 4 is a schematic cross-section view take along line I-I' FIG. 1 of another embodiment of the present disclosure;
FIG. 5A is a view obtained by capturing an image of a center region of a body in a first direction with a scanning electron microscope (SEM) in a comparative example; and
FIG. 5B is a view obtained by capturing an image of a center region of a body in a first direction with a scanning electron microscope (SEM) according to an inventive example.

### DETAILED DESCRIPTION

Hereinafter, example embodiments of the present disclosure will be described with reference to specific example embodiments and the attached drawings. The example embodiments of the present disclosure may, however, be exemplified in many different forms and should not be construed as being limited to the specific embodiments set forth herein. The example embodiments disclosed herein are provided for those skilled in the art to better explain the present disclosure. Therefore, in the drawings, the shapes and dimensions of elements may be exaggerated for clarity, and the same reference numerals will be used throughout to designate the same or like elements.

In addition, in order to clearly describe the present disclosure in the drawings, the contents unrelated to the description are omitted, and since sizes and thicknesses of each component illustrated in the drawings are arbitrarily illustrated for convenience of description, the present disclosure is not limited thereto. In addition, components with the same function within the same range of ideas are described using the same reference numerals. Throughout the specification, when a certain portion "includes" or "comprises" a certain component, this indicates that other components are not excluded and may be further included unless otherwise noted.

In the drawings, a first direction may be defined as a thickness T direction, a second direction may be defined as a length L direction, and a third direction may be defined as a width W direction.

### Multilayer Electronic Component

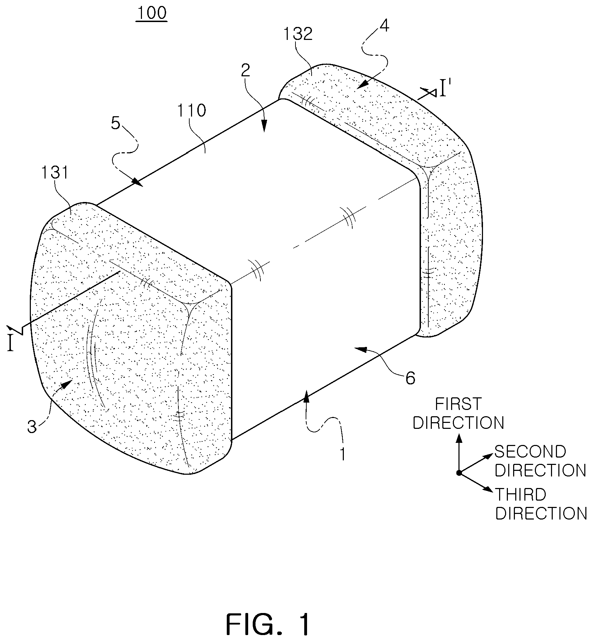

FIG. 1 is a perspective view schematically illustrating a multilayer electronic component according to an example embodiment of the present disclosure.

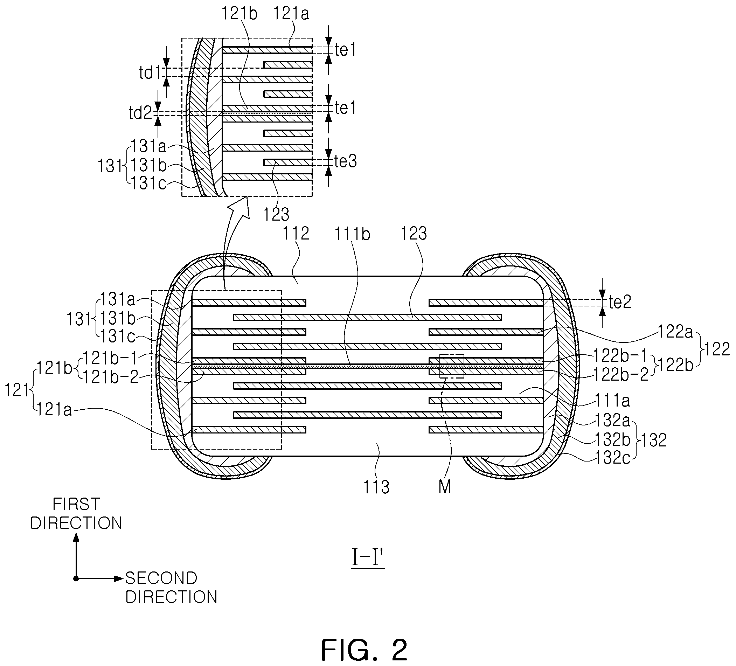

FIG. 2 is a schematic cross-sectional view taken along line I-I' of FIG. 1.

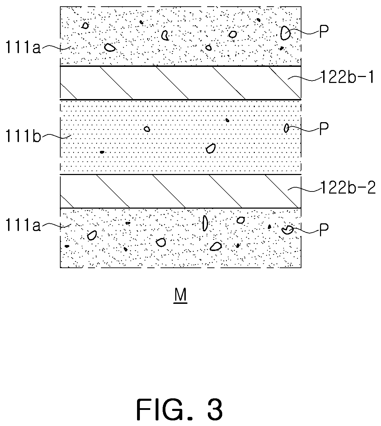

FIG. 3 schematically illustrates an enlarged view of region M of FIG. 2.

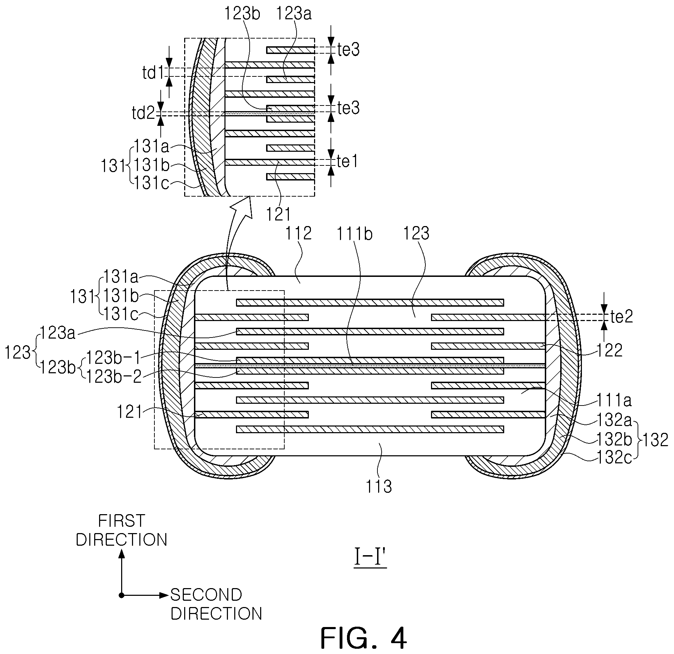

FIG. 4 is a schematic cross-section view take along line I-I' FIG. 1 of another embodiment of the present disclosure;

Hereinafter, a multilayer electronic component according to an example embodiment of the present disclosure will be described in detail with reference to FIGS. 1 to 4. However, as an example of a multilayer electronic component, a multilayer ceramic capacitor will be described, but the multilayer electronic component of the present disclosure may also be applied to various electronic products using dielectric compositions, such as inductors, piezoelectric elements, varistors, or thermistors.

A multilayer electronic component 100 according to an example embodiment of the present disclosure includes:
a body 110 including a plurality of first dielectric layers 111a, internal electrodes 121 and 122 including first and second internal electrodes 121 and 122 spaced apart from each other on the same first dielectric layer 111a, and floating electrodes 123 alternately disposed with the internal electrodes 121 and 122 in a first direction with the first dielectric layer 111a interposed therebetween; and first and second external electrodes 131 and 132 disposed on the body 110 and connected to the first and second internal electrodes 121 and 122, respectively. The body 110 further **includes** double internal electrodes 121b and 122b. The double internal electrode 121b **includes** bilayered internal electrodes 121b-1 and 121b-2 disposed adjacently to each other in the first direction with a second dielectric layer 111b interposed therebetween. The double internal electrode 122b **includes** bilayered internal electrodes 122b-1 and 122b-2 disposed adjacently to each other in the first direction with the second dielectric layer 111b interposed therebetween.

The body 110 **includes** a first dielectric layer 111a, internal electrodes 121 and 122, and floating electrodes 123.

Specifically, the body 110 further **includes** a capacitance forming portion in which the internal electrodes 121 and 122 and the floating electrodes 123 are alternately stacked in a first direction with the first dielectric layer 111a interposed therebetween to form capacitance.

There is no particular limitation on the specific shape of the body 110, but as illustrated, the body 110 may have a hexahedral shape or a shape similar thereto. Due to contraction of ceramic powder particles included in the body 110 during a sintering process, the body 110 may not have a hexahedral shape with perfectly straight lines, but may have a substantially hexahedral shape.

The body 110 **includes** first and second surfaces 1 and 2 opposing each other in the first direction, third and fourth surfaces 3 and 4 connected to the first and second surfaces 1 and 2 and opposing each other in a second direction, and fifth and sixth surfaces 5 and 6 connected to the first to fourth surfaces 1, 2, 3 and 4 and opposing each other in a third direction.

In a state in which a plurality of first dielectric layers 111a included in the body 110 are sintered, boundaries between adjacent first dielectric layers 111a may be integrated so as to be difficult to identify without using a scanning electron microscope (SEM).

A material included in the first dielectric layer 111a is not limited as long as sufficient electrostatic capacitance may be obtained therewith. In general, a perovskite (ABO₃)-based material may be used, and for example, a barium titanate-based material, a lead composite perovskite-based material, or a strontium titanate-based material may be used. The barium titanate-based material may include BaTiO₃-based ceramic particles, and examples of ceramic particles may include BaTiO₃, and (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1) or Ba(Ti_{1-y}Zr_{y})O₃ (0<y<1) which is formed by partially employing calcium (Ca) and zirconium (Zr) in BaTiO₃.

Additionally, as the materials included in the first dielectric layer 111a, various ceramic additives, organic solvents, binders, dispersants, and the like, may be added to particles such as barium titanate (BaTiO₃) according to the purpose of the present disclosure.

A thickness td1 of the first dielectric layer 111a does not need to be particularly limited.

However, in order to ensure stable reliability in a high-voltage environment of the multilayer electronic component, the thickness of the first dielectric layer 111a may be 100 µm or less, and the thickness of the first dielectric layer 111a may be, preferably, 90 µm or less.

However, the present disclosure is not limited thereto, and in order to more easily achieve miniaturization and high capacitance of the multilayer electronic component, the thickness of the first dielectric layer 111a may be 30 µm or less, preferably 20 µm or less, and more preferably 10 µm or less.

In ultra-small products, the thickness of the first dielectric layer 111a may be 3.0 µm or less, preferably 1.0 µm or less, and more preferably 0.6 µm or less.

Here, the thickness td1 of the first dielectric layer 111a may refer to a thickness td1 of the first dielectric layer 111a disposed between the internal electrodes 121 and 122 and the floating electrode 123.

Meanwhile, the thickness td1 of the first dielectric layer 111a may refer to a first directional size of the first dielectric layer 111a. Additionally, the thickness td1 of the first dielectric layer 111a may refer to an average thickness td1 of the first dielectric layer 111a, and may refer to an average size of the first dielectric layer 111a in the first direction.

The average size of the first dielectric layer 111a in the first direction may be measured by scanning first and second directional cross-sections of the body 110 with a scanning electron microscope (SEM) of 10,000X magnification. More specifically, the average size of one first dielectric layer 111a in the first direction may refer to an average value calculated by measuring the first directional size of one first dielectric layer 111a at 30 points spaced apart from each other at equal intervals in the second direction in the scanned image. When the average value is measured by extending an average value measurement up to 10 first dielectric layers 111a, an average thickness of the first dielectric layers 111a may be further generalized.

In the present disclosure, the internal electrodes 121 and 122 will be described as including single-layered internal electrodes 121a and 122a and double internal electrodes 121b and 122b, and unless there are special circumstances, the description of the internal electrodes 121 and 122 may be equally applied to the single-layered internal electrodes 121a and 122a and the double internal electrodes 121b and 122b.

The internal electrodes 121 and 122 may be spaced apart from each other in the second direction on the same first dielectric layer 111a. That is, the internal electrodes 121 and 122 may be disposed on substantially the same level as each other in the first direction. As used herein, the expression "substantially the same level" may refer to being at the same height level relative to the height level compared therewith, as will be appreciated by those of skill in the art, and allows for approximations, inaccuracies and limits of measurement under the relevant circumstances. In one or more aspects, the terms "substantially," "about," and "approximately" may provide an industry-accepted tolerance for their corresponding terms and/or relativity between items, such as a tolerance of ± 1%, ± 5% , or ± 10% of the actual value stated, and other suitable tolerances.

The internal electrodes 121 and 122 may include a first internal electrode 121 and a second internal electrode 122, and the first and second internal electrodes 121 and 122 may be spaced apart from each other in the second direction on the same first dielectric layer 111a included in the body 110, and may be exposed to the third and fourth surfaces 3 and 4 of the body 110, respectively.

More specifically, the first internal electrode 121 may be spaced apart from the fourth surface 4 and the second internal electrode 122 and may be exposed through the third surface 3, and the second internal electrode 122 may be spaced apart from the third surface 3 and the first internal electrode 121 and may be exposed through the fourth surface 4. A first external electrode 131 may be disposed on the third surface 3 of the body 110 and may be connected to the first internal electrode 121, and a second external electrode 132 may be disposed on the fourth surface 4 of the body 110 and may be connected to the second internal electrode 122.

That is, the first internal electrode 121 may be connected to the first external electrode 131 without being connected to the second external electrode 132, and the second internal electrode 122 may be connected to the second external electrode 132 without being connected to the first external electrode 131. In this case, the first and second internal electrodes 121 and 122 may be electrically separated from each other by a region of the first dielectric layer 111a disposed in the middle in the second direction.

The floating electrode 123 may be alternately arranged in the first direction with the internal electrodes 121 and 122 with the first dielectric layer 111a interposed therebetween.

The floating electrode 123 may be disposed on the first dielectric layer 111a, but is not particularly limited thereto and not be disposed on the same first dielectric layer 111a as the internal electrodes 121 and 122.

Additionally, the floating electrode 123 may be spaced apart from the third and fourth surfaces 3 and 4 of the body, and may not be electrically connected to the first and second external electrodes 131 and 132.

The floating electrode 123 may partially overlap the internal electrodes 121 and 122 in the first direction to form capacitance, and more specifically, when one end of the first internal electrode 121 is in contact with the third surface 3, the other end of the first internal electrode 121 may partially overlap with one end of the floating electrode 123, and when one end of the second internal electrode 122 is in contact with the fourth surface 4, the other end of the second internal electrode 122 may partially overlap with the other end of the floating electrode 123.

A region in which the floating electrode 123 and the internal electrodes 121 and 122 overlap each other is not particularly limited as long as sufficient electrostatic capacitance may be obtained therewith.

Meanwhile, the body 110 may be formed by alternately stacking ceramic green sheets on which the first internal electrode 121 and the second internal electrode 122 are printed and ceramic green sheets on which the floating electrodes 123 are printed, and then sintering the ceramic green sheets.

The internal electrodes 121 and 122 and the floating electrode 123 may be formed with the same composition, but are not particularly limited thereto and may be formed with different compositions. The materials included in the internal electrodes 121 and 122 and the floating electrode 123 are not particularly limited, and materials with excellent electrical conductivity may be used. For example, the internal electrodes 121 and 122 may include one or more of nickel (Ni), copper (Cu), palladium (Pd), silver (Ag), gold (Au), platinum (Pt), tin (Sn), and tungsten (W), titanium (Ti), and alloys thereof.

Additionally, the internal electrodes 121 and 122 and the floating electrodes 123 may be formed by printing a conductive paste for internal electrodes including one or more nickel (Ni), copper (Cu), palladium (Pd), silver (Ag), gold (Au), platinum (Pt), tin (Sn), tungsten (W), titanium (Ti) and alloys thereof on a ceramic green sheet. A printing method for the conductive paste for internal electrodes may be a screen printing method or a gravure printing method, but the present disclosure is not limited thereto.

Meanwhile, the thicknesses te1, te2 and te3 of the internal electrodes 121 and 122 and the floating electrode 123 do not need to be particularly limited.

However, in order to achieve high capacitance of the multilayer electronic component, each of the thicknesses te1, te2 and te3 of the internal electrodes 121 and 122 and the floating electrode 123 may be less than 3.0 µm, and in order to more easily achieve miniaturization and high capacitance of the multilayer electronic component, each of the thicknesses te1, te2 and te3 of the internal electrodes 121 and 122 and the floating electrode 123 may be 1.0 µm or less, preferably 0.6 µm or less, and more preferably 0.4 µm or less.

Here, the thicknesses te1, te2 and te3 of the internal electrodes 121 and 122 and the floating electrode 123 may refer to a first directional size of the internal electrodes 121 and 122 and the floating electrode 123. Additionally, the thicknesses te1, te2 and te3 of the internal electrodes 121 and 122 and the floating electrode 123 may refer to average thicknesses te1, te2 and te3 of the internal electrodes 121 and 122 and the floating electrode 123, and may refer to an average size of the internal electrodes 121 and 122 and the floating electrode 123 in the first direction.

The average sizes of the internal electrodes 121 and 122 and the floating electrode 123 in the first direction may be measured by scanning images of first and second directional cross-sections of the body 110 with a scanning electron microscope (SEM) of 10,000X magnification. More specifically, the average size of the single-layered internal electrodes 121 and 122 and the floating electrode in the first direction may be an average value calculated by measuring first directional sizes of the single-layered internal electrodes 121 and 122 and the floating electrode 123 at 30 points spaced apart from each other at equal intervals in the second direction in the scanned image. Additionally, when the average value is measured by extending an average value measurement up to 10 internal electrodes 121 and 122 and 10 floating electrodes 123, an average thickness of the internal electrodes 121 and 122 and the floating electrodes 123 may be further generalized. The measurement of an average size is not limited to these examples, and one of ordinary skill may select the number of measurement points, the interval between the measurement points, and so forth, if needed.

In an example embodiment of the present disclosure, the body 110 **includes** double internal electrodes 121b and 122b in which bilayered internal electrodes 121b and 122b are arranged adjacently to each other in the first direction with a second dielectric layer 111b interposed therebetween.

The double internal electrodes 121b and 122b may be identical to the single-layered internal electrodes 121a and 122a except that the double internal electrodes 121b and 122b have bilayered internal electrode structures 121b-1, 122b-1, 121b-2 and 122b-2, and descriptions of the internal electrodes 121 and 122 and the single-layered internal electrodes 121a and 122a may be equally applied to the double internal electrodes 121b and 122b.

More specifically, the double internal electrodes 121b and 122b may include double first internal electrodes 121b-1 and 121b-2 and double second internal electrodes 122b-1 and 122b-2. The double first internal electrodes 121b-1 and 121b-2 may be a structure in which a double first-first internal electrode 121b-1 and a double first-second internal electrode 121b-2 are alternatively arranged with the second dielectric layer 111b interposed therebetween, and the double second internal electrodes 122b-1 and 122b-2 may be a structure in which a double second-first internal electrode 122-1b and a double second-second internal electrode 122b-2 are alternatively arranged with the second dielectric layer 111b interposed therebetween.

As the body 110 includes the double internal electrodes 121b and 122b, a region in which stress is concentrated due to the electrodistortion effect generated under a high voltage environment may be dispersed to resolve the electrodistortion stress by preventing concentration of the electrodistortion stress and inducing crack generation in the second dielectric layer 111b between the double internal electrodes 121b and 122b that do not form the capacitance, thereby reducing a voltage applied per thickness (the first directional size) of the first dielectric layer 111a, and improving DC-bias and withstand voltage characteristics.

In this case, the double internal electrodes 121b and 122b may be disposed in a center portion of the body 110 in the first direction, and for example, when the body 110 is divided into three areas in the first direction, the double internal electrodes 121b and 122b may be disposed in a second area of the three areas.

The double internal electrodes 121b and 122b may be disposed in the center portion of the body 110 in the first direction in which electrostrictive stress is most concentrated, so that the electrodistortion stress may be distributed and DC-bias and withstand voltage characteristics may be improved.

In an **claimed** embodiment of the present disclosure, the number of double internal electrodes 121b and 122b included in the body 110 are one.

In other words, the body 110 **includes** a structure in which the internal electrodes 121a and 122a and the floating electrodes 123 are alternately arranged in the first direction with the first dielectric layer 111a interposed therebetween in most regions, which **denotes** including one double internal electrode 121b or 122b having a structure in which the stacking order is (internal electrodes 121b-1 and 122b-1) - (second dielectric layer 111b) - (internal electrodes 122b-1 and 122b-2), i.e., the bilayered internal electrodes 121b and 122b are disposed adjacently to each other with the second dielectric layer 111b disposed therebetween.

In the multilayer electronic component 100 of the same size, by including only one set of the double internal electrodes 121b and 122b, the DC-bias applied per unit thickness (1 µm) of the first dielectric layer 111a may be further reduced.

Here, including only one set of the double internal electrodes 121b and 122b may denote including one set of bilayered internal electrodes 121b-1, 122b-1, 121b-2 and 122b-2.

With an increase in the number of double internal electrodes 121b and 122b, due to a difference in sintering properties between the second dielectric layer 111b and the first dielectric layer 111a, a large amount of sintering stress may occur, which may actually lower the withstand voltage characteristics. Additionally, the risk of cracks occurring in the first dielectric layer 111a may increase to lead to a risk in which capacitance characteristics may deteriorate.

The material included in the second dielectric layer 111b is not particularly limited. In general, a perovskite (ABO₃)-based material may be used, and for example, a barium titanate-based material, a lead composite perovskite-based material, or a strontium titanate-based material may be used. The barium titanate-based material may include BaTiO₃-based ceramic particles, and examples of ceramic particles may include (Ba₁₋ₓCaₓ)TiO₃ (0<x<1), Ba(Ti_{1-y}Ca_{y})O₃ (0<y<1) or (Ba₁₋ₓCaₓ)(Ti_{1-y}Zr_{y})O₃ (0<x<1, 0<y<1) which is formed by partially employing calcium (Ca) and zirconium (Zr) in BaTiO₃.

Additionally, as the material including the second dielectric layer 111b, various ceramic additives, organic solvents, binders, dispersants, and the like, may be added to particles such as barium titanate (BaTiO₃) depending on the purpose of the present disclosure.

A thickness td2 of the second dielectric layer 111b does not need to be particularly limited.

However, in order to ensure stable reliability in the high-voltage environment of the multilayer electronic component, the thickness of the second dielectric layer 111b may be 15 µm or less, and the thickness of the second dielectric layer 111b may be, preferably, 10 µm or less.

However, the present disclosure is not limited thereto, and in order to simultaneously achieve miniaturization and high capacitance in ultra-small products, the thickness of the second dielectric layer 111a may be 3.0 µm or less, preferably 1.0 µm or less, and more preferably 0.6 µm or less.

Here, the thickness td2 of the second dielectric layer 111b may refer to a thickness td2 of the second dielectric layer 111b disposed between the double internal electrodes 121b and 122b in the first direction.

Meanwhile, the thickness td2 of the second dielectric layer 111b may refer to a first directional size of the second dielectric layer 111b. Additionally, the thickness td2 of the second dielectric layer 111b may refer to an average thickness td2 of the second dielectric layer 111b, and may refer to an average size of the second dielectric layer 111b in the first direction.

Meanwhile, in an example embodiment of the present disclosure, a composition of the second dielectric layer 111b may be different from a composition of the first dielectric layer 111a.

A difference between the composition of the second dielectric layer 111b and the first dielectric layer 111a may denote that the ceramic material is the same but at least one of the additives, the organic solvent, the binder and the dispersant is different or the amount added is different, or the ceramic material is different, but the present disclosure is not limited thereto.

As the composition of the second dielectric layer 111b and the composition of the first dielectric layer 111a are different from each other, the first dielectric layer 111a which forms the dielectric capacitance, may improve dielectric properties, and the second dielectric layer 111b on which electrostrictive stress concentrates may improve strength characteristics. By changing the composition of each dielectric layer, the structure and materials may be appropriately changed to comply with the purpose of each dielectric layer.

Meanwhile, when the number of pores P per 1 µm² included in a cross-section of the second dielectric layer 111b is refer to as B, and the number of pores P per 1 µm² included in a cross-section of the first dielectric layer 111a is referred to as A, B < A may be satisfied, and preferably, B < 0.25 × A may be satisfied.

For example, the number of pores per 1 µm² included in the cross-section of the second dielectric layer may be 5.00 or less, that is, B ≤ 5.00 may be satisfied.

Here, the cross-sections of the first and second dielectric layers 111a and 111b may refer to first and second directional cross-sections in the center portion of the body 110 in the third direction, and the number of pores P may be measured using a program from an image captured through a scanning electron microscope (P) in the corresponding cross-section, but the present disclosure is not limited thereto.

As the number of pores P per 1 µm² included in the cross-section of the second dielectric layer 111b and the first dielectric layer 111a satisfies B < A, the generation of cracks due to the concentration of electrostrictive stress may be included to the second dielectric layer 111b, so that the generation of cracks in the first dielectric layer 111a may be suppressed, thereby preventing deterioration of dielectric properties.

In general, internal electrodes are designed to increase the sinterability of adjacent dielectric layers, thereby lowering porosity and helping crystal grain growth. However, when the porosity in the dielectric layer decreases, as the sintering density increases, the sintering stress may increase, and there may be a risk of becoming vulnerable to the generation and propagation of cracks.

Accordingly, the porosity of the second dielectric layer 111b, which does not form dielectric capacitance, may be reduced to facilitate the generation and propagation of the cracks, thereby suppressing the generation of cracks in the first dielectric layer 111a forming the dielectric capacitance.

When the number of pores P per 1 µm² included in the cross-section of the second dielectric layer 111b and the first dielectric layer 111a is A ≤ B, since the force inducing the generation of the cracks in the second dielectric layer 111b may be reduced, there may be a risk that the cracks may be generated in the first dielectric layer 111a, which may deteriorate dielectric properties.

In an example embodiment of the present disclosure, an average size td1 of the first dielectric layer 111a in the first direction may be larger than an average size td2 of the second dielectric layer 111b in the first direction. In other words, td2 < td1 may be satisfied.

More specifically, the average size td1 in the first direction of the first dielectric layer 111a may be 8 times or more than the average size td2 in the first direction of the second dielectric layer 111b. In other words, 8 × td2 ≤ td1 may be satisfied.

When the average size td1 of the first dielectric layer 111a in the first direction is larger than the average size td2 of the second dielectric layer 111b in the first direction (td2 < td1), a magnitude of the voltage applied per unit thickness (1 µm) of the first dielectric layer 111a may be reduced, and even if stress due to the electrodistortion effect is concentrated, the cracks may be prevented from being easily generated.

When the average size td1 of the first dielectric layer 111a in the first direction is less than or equal to the average size td2 of the second dielectric layer 111b in the first direction (td1 ≤ td2), a magnitude of the voltage applied per unit thickness (1 µm) of the first dielectric layer 111a may be increased, and there may be a risk that the stress due to the electrodistortion effect is concentrated to generate the cracks in the first dielectric layer 111a, resulting in deteriorating dielectric properties.

Meanwhile, the average thickness td1 of at least one of the first dielectric layers 111a and an average thickness te1 of at least one layer of a plurality of single-layered internal electrodes 121a and 122a may satisfy 2 × te1 < td1.

In other words, the average thickness td1 of one first dielectric layer 111a may be larger than twice the average thickness te1 of one layer of the internal electrodes 121a and 122a. Preferably, the average thickness td1 of a plurality of first dielectric layers 111a may be larger than twice the average thickness te of a plurality of single-layered internal electrodes 121a and 122a.

In general, high-voltage electronic components have a major issue due to reliability issues due to a decrease in breakdown voltage (BDV) in a high-voltage environment.

Accordingly, in order to prevent a decrease in the breakdown voltage (BDV) in a high voltage environment, the average thickness td1 of the first dielectric layer 111a may be made larger than twice the average thickness te of the single-layered internal electrodes 121a and 122a, so that the thickness of the first dielectric layer 111a, which is a distance between the single-layered internal electrodes 121 and 122 and the floating electrode 123, may be increased, thereby improving the breakdown voltage (BDV) characteristics.

When the average thickness td1 of the first dielectric layer 111a is less than or equal to twice the average thickness te1 of the single-layered internal electrodes 121a and 122a, an average thickness of the first dielectric layer 111a, which is a distance between the single-layered internal electrodes 121a and 122a and the floating electrode 123, may be thin, which may reduce the breakdown voltage, and a short circuit may occur between the internal electrodes 121a and 122a and the floating electrode 123.

A multilayer electronic component 100 according to another example embodiment of the present disclosure **includes** a body 110 including a plurality of first dielectric layers 111a, internal electrodes 121 and 122 including first and second internal electrodes 121 and 122 spaced apart from each other on the same first dielectric layer 111a, and floating electrodes 123 alternately disposed with the internal electrodes 121 and 122 in a first direction with the first dielectric layer 111a interposed therebetween; and first and second external electrodes 131 and 132 disposed on the body 110 and connected to the first and second internal electrodes 121 and 122, respectively, and the body 110 **includes** a double floating electrode 123b including bilayered floating electrodes 123b-1 and 123b-2 disposed adjacently to each other in the first direction with a second dielectric layer 111b interposed therebetween.

In the present disclosure, the description of the double internal electrodes 121 and 122 may be equally applied to the double floating electrode 123, and redundant descriptions will be omitted, but one skilled in the art will be able to easily understand the omitted description.

In an example embodiment of the present disclosure, the body 110 **includes** a double floating electrode 123b in which bilayered floating electrodes 123b-1 and 123b-2 are disposed adjacently to each other in the first direction with the second dielectric layer 111b interposed therebetween.

The double floating electrode 123b may be the same as the single-layered floating electrode 123a except that the double floating electrode 123 has a bilayered floating electrode structure 123.

More specifically, one double floating electrode 123b may include a double first floating electrode 123b-1 and a double second floating electrode 123b-2, and may have a structure in which the double first floating electrode 123b-1 and the double second floating electrode 123b-2 are alternately arranged with the second dielectric layer 111b interposed therebetween.

In the present disclosure, the floating electrodes 123 will be described as including single-layered floating electrode 123a and double floating electrodes 123b, and unless there are special circumstances, the description of the floating electrode 123 may be equally applied to the single-layered floating electrode 123a and the double floating electrode 123b.

As the body 110 includes double floating electrodes 123b, a region in which stress due to the electrostriction effect that occurs under a high voltage environment is concentrated may be dispersed to resolve the electrodistortion stress by preventing concentration of electrodistortion stress and inducing crack generation in the second dielectric layer 111b between the double floating electrodes 123b that do not form the capacitance, thereby reducing a voltage applied per thickness (the first directional size) of the first dielectric layer 111a, and improving DC-bias and withstand voltage characteristics.

In this case, the double floating electrode 123 may be disposed in a center portion of the body 110 in the first direction, and for example, when the body 110 is divided into three areas in the first direction, the double floating electrode 123b may be disposed in a second area of the three areas.

The double floating electrode 123b in the center portion of the first direction of the body 110 in which electrostrictive stress is most concentrated, so that the electrodistortion stress may be distributed and DC-bias and withstand voltage characteristics may be improved.

In an **claimed** embodiment of the present disclosure, the number of double floating electrodes 123b included in the body 110 is one.

In other words, the body 110 **includes** a structure in which internal electrodes 121a and 122a and single-layered floating electrode 123a are alternately arranged in the first direction with the first dielectric layer 111a interposed therebetween in most regions, which **denotes** including one double floating electrode 123b having a structure in which the stacking order is (floating electrode 123b-1) - (second dielectric layer 111b) - (floating electrode 123b-2), i.e., the bilayered floating electrodes 123b-1 and 123b-2 are disposed adjacently to each other with the second dielectric layer 111b disposed therebetween.

In the multilayer electronic component 100 of the same size, by including only one double floating electrodes 123b, the DC-bias applied per unit thickness (1 µm) of the first dielectric layer 111a may be further reduced.

Here, including only one double floating electrodes 123b **denotes** including one set of bilayered floating electrodes 123b-1 and 123b-2.

With an increase in the number of double floating electrodes 123b, due to a difference in sintering properties between the second dielectric layer 111b and the first dielectric layer 111a, a large amount of sintering stress may occur, which may actually lower the withstand voltage characteristics. Additionally, the risk of cracks occurring in the first dielectric layer 111a increases to lead to a risk in which capacitance characteristics may deteriorate.

Meanwhile, an average thickness td1 of at least one of the first dielectric layers 111a and an average thickness te3 of at least one of the floating electrodes 123 may satisfy 2 × te3 < td1.

In other words, the average thickness td1 of one first dielectric layer 111a may be larger than twice the average thickness te3 of the single-layered floating electrode 123. Preferably, the average thickness td1 of a plurality of first dielectric layers 111a may be larger than twice the average thickness te3 of a plurality of floating electrodes 123.

Accordingly, in order to prevent a decrease in the breakdown voltage in a high voltage environment, the average thickness td1 of the first dielectric layer 111a may be made larger than twice the average thickness te3 of the floating electrode 123, thereby increasing the thickness of the first dielectric layer 111a which is a distance between the single-layered internal electrodes 121 and 122 and the floating electrode 123, and improving the breakdown voltage characteristics.

When the average thickness td1 of the first dielectric layer 111a is less than or equal to twice the average thickness te3 of the floating electrode 123, an average thickness of the first dielectric layer 111a, which is a distance between the single-layered internal electrodes 121a and 122a and the floating electrode 123, may be thin, which may reduce the breakdown voltage, and a short circuit may occur between the internal electrodes 121a and 122a and the floating electrode 123.

Meanwhile, the body 110 may include cover portions 112 and 113 disposed on both end-surfaces of the capacitance forming portion in the first direction.

Specifically, the body 110 may include a first cover portion 112 disposed on one surface of the capacitance forming portion in the first direction and a second cover portion 113 disposed on the other surface of the capacitance forming portion in the first direction, and more specifically, the body 110 may include an upper cover portion 112 disposed above the capacitance forming portion in the first direction and a lower cover portion 113 disposed below the capacitance forming portion in the first direction.

The upper cover portion 112 and the lower cover portion 113 may be formed by stacking a single first dielectric layer 111a or two or more first dielectric layers 111a on upper and lower surfaces of the capacitance forming portion in the first direction, respectively, and may basically serve to prevent damage to the internal electrodes 121 and 122 due to physical or chemical stress.

The upper cover portion 112 and the lower cover portion 113 do not include the internal electrodes 121 and 122, and may include the same material as the first dielectric layer 111a. That is, the upper cover portion 112 and the lower cover portion 113 may include a ceramic material, for example, a barium titanate (BaTiO3)-based ceramic material.

Meanwhile, the thickness tc of the cover portions 112 and 113 does not need to be particularly limited.

However, in order to more easily achieve miniaturization and high capacitance of the multilayer electronic component, a thickness tc of the cover portions 112 and 113 may be 100 µm or less, preferably 30 µm or less, and more preferably 20 µm or less in ultra-small products.

Here, the thickness tc of the cover portions 112 and 113 may refer to a first directional size of the cover portions 112 and 113 in the first direction. Additionally, the thickness tc of the cover portions 112 and 113 may refer to an average thickness tc of the cover portions 112 and 113, and may refer to an average size of the cover portions 112 and 113 in the first direction.

The average size of the cover portions 112 and 113 in the first direction may be measured by scanning images of the first and second directional cross-sections of the body 110 with a scanning electron microscope (SEM) of 10,000X magnification. More specifically, the average size thereof may refer to an average value calculated by measuring the first directional size at 30 points spaced apart from each other at equal intervals in the second direction in a scanned image of one cover portion.

Additionally, the average size of the cover portion in the first direction measured by the above-described method is substantially the same as the average size of the cover portion in the first direction in the first and third direction cross-sections of the body 110.

In an example embodiment of the present disclosure, a structure in which the multilayer electronic component 100 has two external electrodes 131 and 132 is described, but the number and shape of the external electrodes 131 and 132 may vary depending on the shape of the internal electrodes 121 and 122 or other purposes.

The external electrodes 131 and 132 may be disposed on the body 110 and connected to the internal electrodes 121 and 122.

More specifically, the external electrodes 131 and 132 may including first and second external electrodes 131 and 132 disposed on the third and fourth surfaces 3 and 4 of the body 110, respectively, and connected to the first and second internal electrodes 121 and 122, respectively. That is, the first external electrode 131 may be disposed on the third surface 3 of the body and connected to the first internal electrode 121, and the second external electrode 132 may be disposed on the fourth surface 4 of the body and connected to the second internal electrode 122.

However, the external electrodes 131 and 132 may not be connected to the floating electrode 123.

Additionally, the external electrodes 131 and 132 may be disposed to extend onto a portion of the first and second surfaces 1 and 2 of the body 110, or may be disposed to partially extend onto the fifth and sixth surfaces 5 and 6 of the body 110. That is, the first external electrode 131 may be disposed on a portion of the first, second, fifth and sixth surfaces 1, 2, 5 and 6 of the body 110, and may be disposed on the third surface 3 of the body 110, and the second external electrode 132 may be disposed on a portion of the first, second, fifth and sixth surfaces 1, 2, 5 and 6 of the body 110, and may be disposed on the third surface 3 of the body 110.

Meanwhile, the external electrodes 131 and 132 may be formed using any material as long as they have electrical conductivity, such as a metal, and the specific material may be determined considering electrical properties, structural stability, and the like, and may further have a multilayer structure.

For example, the external electrodes 131 and 132 may each include at least one electrode layer 131a, 132a, 131b and 132b disposed on the body 110 and a plating layer 131c and 132c disposed on the at least one electrode layer.

For a more specific example of the at least one electrode layer, the at least one electrode layer may include a first electrode layer 131a and 132a, which is a sintered electrode including a first conductive metal and glass, and a second electrode layer 131b and 132b, which is a resinbased electrode including a second conductive metal and a resin.

Here, the first conductive metal may refer to a conductive metal included in the first electrode layer, and the second conductive metal may refer to a conductive metal included in the second electrode layer. In this case, the first conductive metal and the second conductive metal may be identical to or different from each other, and may include the same metal material, but the present disclosure is not limited thereto.

Additionally, electrode layers 131a, 132a, 131b and 132b may be formed by sequentially forming first electrode layers 131a and 132a and second electrode layers 131b and 132b on the body 110.

Additionally, the electrode layers 131a, 132a, 131b and 132b may be formed by transferring a sheet including a conductive metal onto the body 110, or may be formed by transferring a sheet including a conductive metal onto a sintered electrode.

A material with excellent electrical conductivity may be used as the conductive metal included in the electrode layers 131a, 132a, 131b and 132b, and for example, the conductive metals may include one or more selected from the group consisting of Nickel (Ni), copper (Cu), palladium (Pd), silver (Ag), gold (Au), platinum (Pt), tin (Sn), tungsten (W), titanium (Ti) and alloys thereof, but the present disclosure is not limited thereto.

In an example embodiment of the present disclosure, the electrode layers 131a, 132a, 131b and 132b may have a bilayered structure including first electrode layers 131a and 132a and second electrode layers 131b and 132b, and accordingly, the external electrodes 131 and 132 may include first electrode layers 131a and 132a including a conductive metal and glass, and second electrode layers 131b and 132b disposed on the first electrode layers 131a and 132a and including a conductive metal and a resin.

The first electrode layers 131a and 132a may serve to improve adhesive force to the body 110 by including glass, and the second electrode layers 131b and 132b may serve to improve warpage strength by including a resin.

A conductive metal used in the first electrode layers 131a and 132a is not particularly limited as long as the conductive metal has a material that may be electrically connected to the internal electrodes 121 and 122 to form the capacitance, and the conductive metal may include, for example, one or more selected from the group consisting of nickel (Ni), copper (Cu), palladium (Pd), silver (Ag), gold (Au), platinum (Pt), tin (Sn), tungsten (W), titanium (Ti) and alloys thereof. The first electrode layers 131a and 132a may be formed by applying a conductive paste prepared by adding glass frit to conductive metal particles and then sintering the conductive paste.

The conductive metal included in the second electrode layers 131b and 132b may serve to electrically connect to the first electrode layers 131a and 132a.

The conductive metal included in the second electrode layers 131b and 132b is not particularly limited as long as the conductive metal has a material that may be electrically connected to the electrode layers 131a and 132a, and the conductive metal may include one or more selected from the group consisting of nickel (Ni), copper (Cu), palladium (Pd), silver (Ag), gold (Au), platinum (Pt), tin (Sn), tungsten (W), titanium (Ti) and alloys thereof.

The conductive metal included in the second electrode layers 131b and 132b may include one or more of spherical particles and flake-shaped particles. That is, the conductive metal may consist only of flake-shaped particles or only spherical particles, and may be a mixture of flake-shaped particles and spherical particles. Here, the spherical particle may include a shape that is not completely spherical, for example, a shape in which a length ratio of a major axis and a minor axis (major axis/minor axis) is 1.45 or less. The flake-shaped particles may refer to particles with a flat and elongated shape, and although the present disclosure is not limited thereto, the length ratio of the major axis and the minor axis (major axis/minor axis) may be for example, 1.95 or more. The lengths of the major and minor axes of the spherical particles and the flake-shaped particles may be measured from images obtained by scanning first and second directional cross-sections cut from the center portion of the multilayer electronic component in the third direction with a scanning electron microscope (SEM).

The resin included in the second electrode layers 131b and 132b may ensure bonding properties and serve as shock absorbers. The resin included in the second electrode layers 131b and 132b may have bonding properties and shock absorption properties, and the resin is not particularly limited as long as the resin may be mixed with conductive metal particles to make a paste, and may include, for example, an epoxy-based resin.

Additionally, the second electrode layers 131b and 132b may include a plurality of metal particles, an intermetallic compound, and a resin. The intermetallic compound may be included to further improve electrical connectivity with the first electrode layers 131a and 132a. The intermetallic compound may serve to improve electrical connectivity by connecting a plurality of metal particles, and may serve to surround a plurality of metal particles and connect the metal particles to each other.

In this case, the intermetallic compound may include a metal having a melting point lower than a curing temperature of the resin. That is, because the intermetallic compound includes the metal having the melting point lower than the curing temperature of the resin, the metal having the melting point lower than the curing temperature of the resin is melted during a drying and curing process, and an intermetallic compound with a portion of the metal particles is formed to surround the metal particle. In this case, the intermetallic compound may preferably include a low melting point metal of 300^{°}C or lower.

For example, the intermetallic compound may include Sn, which has a melting point of 213 to 220°C. Sn is melted during the drying and curing process, and the melted Sn wets high melting point metal particles such as Ag, Ni or Cu through capillary action, and reacts with some of Ag, Ni or Cu metal particles to form intermetallic compounds such as Ag₃Sn, Ni₃Sn₄, Cu₆Sn₅ and Cu₃Sn. Ag, Ni or Cu that did not participate in the reaction remain in the form of metal particles.

Accordingly, the plurality of metal particles may include one or more of Ag, Ni, and Cu, and the intermetallic compound may include one or more of Ag₃Sn, Ni₃Sn₄, Cu₆Sn₅ and Cu₃Sn.

The plating layers 131c and 132c may serve to improve mounting characteristics.

The types of plating layers 131c and 132c are not particularly limited, and may be a single layer of plating layers 131c and 132c including one or more of nickel (Ni), tin (Sn), palladium (Pd), and alloys thereof, or may be formed of a plurality of layers.

For more specific examples of the plating layers 131c and 132c, the plating layers 131c and 132c may be Ni plating layers or Sn plating layers, and may be in the form in which a Ni plating layer and a Sn plating layer are sequentially formed on the electrode layer, and may be in the form in which the Sn plating layer, the Ni plating layer, and the Sn plating layer are formed sequentially. Additionally, the plating layers 131c and 132c may include a plurality of Ni plating layers and/or a plurality of Sn plating layers.

There is no need to specifically limit the size of the multilayer electronic component 100.

However, in order to achieve both miniaturization and high capacitance, the thickness of the dielectric layer and internal electrode must be thinned to increase the number of stacks, and thus, the effect according to the present disclosure may be more noticeable in the multilayer electronic component 100 having a size of 3216 (length × width: 3.2 mm × 1.6 mm) or less.

Hereinafter, the present disclosure will be described in more detail through examples but this is intended to help the specific understanding of the invention, and the scope of the present invention is not limited by an example embodiment.

### <Example Embodiment>

Table 1 below shows that in Comparative Examples 1 and 2 without double internal electrodes and Inventive Examples 1 and 2 with double internal electrodes, the number of pores included in the first or second dielectric layer was measured.

In the case of Inventive Examples 1 and 2 in which double internal electrodes were applied, the compositions of the first dielectric layer and the second dielectric layer were the same, while in the case of the second dielectric layer, a thickness of the second dielectric layer was manufactured to be thinner than a thickness of the first dielectric layer to increase sinterability under the same firing conditions.

Comparative Example 1 and Inventive Example 1 were manufactured with the same structure (material and thickness) as the first dielectric layer and the internal electrode of Inventive Examples 1 and 2, except for whether there were double internal electrodes.

Comparative Example 2 and Inventive Example 2 were manufactured with the same structure (means the same material and thickness) of the first dielectric layer and the internal electrode as Inventive Examples 1 and 2, except for whether or not the double internal electrodes were applied.

Based on the first and second directional cross-sections of the sintered body, an image of a central region in the first direction of the body was captured with a scanning electron microscope (SEM), and the number of pores P observed in the captured images was measured and listed in Table 1, and the number of pores P per unit area was multiplied by 1,000 and listed in Table 1.

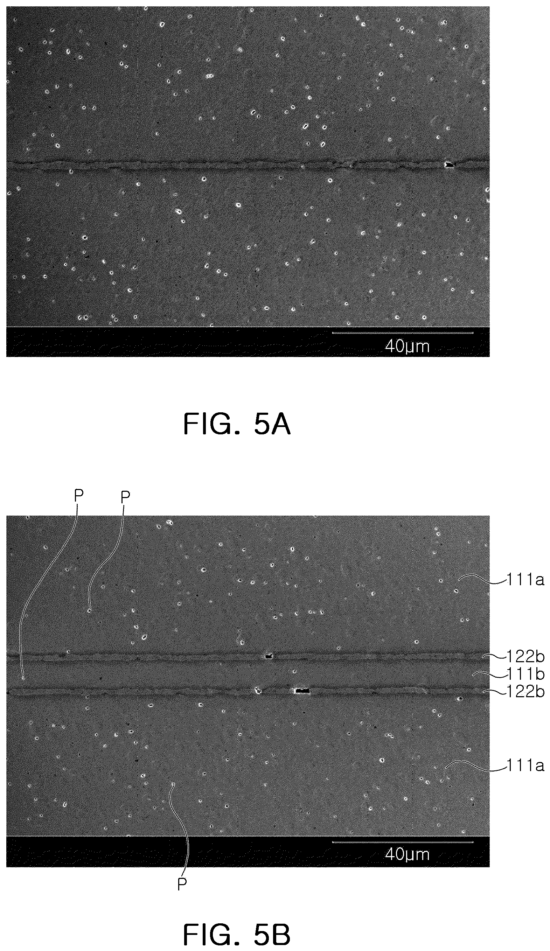

Meanwhile, FIG. 5A is an image obtained by capturing the central region of the body in the first direction with the scanning electron microscope (SEM), in Comparative Example 2, and FIG. 5B is an image obtained by capturing the central region of the body in the first direction with the scanning electron microscope (SEM), in Inventive Example 2.

**<Table 1>**

| | Observation Region | Horizontal (µm) | Vertical (µm) | Area (µm²) | Number of pores (P) | Number of pores (P) per unit area × 1,000 (pores/µm²) |
|---|---|---|---|---|---|---|
| Comparative Example 1 | First dielectric layer | 139 | 45.90 | 6380.7 | 133 | 20.84 |
| Inventive | First | 139 | 56.87 | 7904.5 | 168 | 21.25 |
| Example 1 | dielectric layer | | | | | |
| | Second dielectric layer | 139 | 7.349 | 1021.5 | 5 | 4.89 |
| | | | | | | |
| Comparative Example 2 | First dielectric layer | 139 | 45.89 | 6378.2 | 114 | 17.87 |
| Inventive Example 2 | First dielectric layer | 139 | 40.72 | 5660.2 | 101 | 17.84 |
| | Second dielectric layer | 139 | 8.408 | 1168.7 | 5 | 4.28 |

It may be seen that the second dielectric layer of Inventive Example 1 to which double internal electrodes were applied had the number of pores per unit area × 1000 of 4.89/µm², which is less than 1/4 of the number of pores per unit area of the first dielectric layer in Inventive Example 1 × 1000, 21.25 pores/µm², and it may be seen that this is less than 1/4 of the number of pores per unit area of the first dielectric layer in Comparative Example 1 in which no double internal electrodes were applied × 1000, 20.84 pores/µm².

Additionally, it may be seen that the second dielectric layer of Inventive Example 2 to which double internal electrodes were applied had the number of pores per unit area × 1000 of 4.28/µm², which is less than 1/4 of the number of pores per unit area of the first dielectric layer of Inventive Example 2 × 1000, 17.84 pores/µm², and it may be seen that this is less than 1/4 of the number of pores per unit area of the first dielectric layer of Comparative Example 2 in which no internal electrodes were applied × 1000, 17.87 pores/µm².

From this, it may be seen that the number of pores in the second dielectric layer is less than the number of pores in the first dielectric layer, and it may be predicted that cracks are easier to form in the second dielectric layer than in the first dielectric layer, so that it may be predicted that the generation of cracks in the first dielectric layer may be prevented and the dielectric properties are not deteriorated.

Table 2 below illustrates, when a voltage of 1000 V is applied, depending on the number of double internal electrodes applied, a value obtained by measuring a dielectric capacitance change rate under DC-bias and DC-bias voltage per unit thickness (1 µm) applied to the first dielectric layer.

Test Examples 1 to 4 correspond to sample chips to which double internal electrodes are applied, and the thickness of the second dielectric layer interposed between the double internal electrodes was manufactured to be 10 µm.

**<Table 2>**

| | Number of double internal electrodes | Number of internal electrodes in one layer | First dielectric layer thickness (µm) | DC-bias per unit thickness (V/µm) | Dielectric capacitance change rate (%) |
|---|---|---|---|---|---|
| Test Example 1 | 19 | 0 | 80 µm | 6.25 V/µm | -34.9 |
| Test Example 2 | 13 | 6 | 83.2 µm | 6.01 V/µm | -32.9 |
| Test Example 3 | 7 | 12 | 86.4 µm | 5.79 V/µm | -31.2 |
| Test Example 4 | 1 | 18 | 89.5 µm | 5.59 V/µm | -29.5 |

It can be seen that as the number of double internal electrodes decreases from Test Example 1 to Test Example 4 to 19, 13, 7, and 1, when the same external voltage (1000 V) is applied, a value of DC-bias applied per unit thickness gradually decreases to 6.25 V/µm, 6.01 V/µm, 5.79 V/µm, and 5.59 V/µm, from which it may be predicted that the electrostrictive stress applied to the first dielectric layer will decrease.

Additionally, it may be seen that the dielectric capacitance change rate decreases to -34.9%, -32.9%, -31.2%, and -29.5% from Test Example 1 to Test Example 4, from which the capacitance characteristics of the multilayer electronic component may be improved.

Next, the withstand voltage characteristics were measured by varying the number of double internal electrodes or the thickness of the second dielectric layer, and a chip of size 3216 (length × width, 3.2 mm × 1.6 mm) was manufactured.

The withstand voltage characteristics were evaluated based on the breakdown voltage (BDV), and it was evaluated that the higher a breakdown voltage (BDV) value, the better the withstand voltage characteristics.

In Test Example 5, the number of double internal electrodes was 9, the thickness of the second dielectric layer was manufactured to be 10 µm, and the breakdown voltage (BDV) was measured at 5.816 kV.

In Test Example 6, the number of double internal electrodes was 5, the thickness of the second dielectric layer was manufactured to be 20 um, and the breakdown voltage (BDV) was measured at 5.834 kV.

In Test Example 7, the number of double internal electrodes was 5, the thickness of the second dielectric layer was manufactured to be 10 µm, and the breakdown voltage (BDV) was measured at 6.153 kV.

In Test Example 8, the number of double internal electrodes was 1, the thickness of the second dielectric layer was manufactured to be 10 µm, and the breakdown voltage (BDV) was measured at 6.753 kV.

When comparing Test Examples 6 and 7, it was confirmed that the thinner the thickness of the second dielectric layer, the better the breakdown voltage (BDV), which is expected to be the result of the thinner the thickness of the second dielectric layer in a chip of the same size, the thicker the first dielectric layer.

When comparing Test Example 5, Test Example 7, and Test Example 8, it was confirmed that the breakdown voltage (BDV) was superior as the number of internal electrodes decreased, which is expected to be the result of the smaller the number of second dielectric layers in a chip of the same size, the thicker the first dielectric layer.

Although the example embodiment of the present disclosure has been described in detail above, the present disclosure is not limited to the above-described embodiments and the accompanying drawings but is defined by the appended claims.

## Claims

1. A multilayer electronic component (100), comprising:
a body (110) including a plurality of first dielectric layers (111a), internal electrodes including first and second internal electrodes (121, 122) spaced apart from each other on the same first dielectric layer (111a), and floating electrodes (123) alternately disposed with the internal electrodes (121, 122) in a first direction with the first dielectric layer (111a) interposed therebetween; and
first and second external electrodes (131, 132) disposed on the body (110) and connected to the first and second internal electrodes (121, 122), respectively,
**characterized in that** the body (110) includes a double internal electrode (121b, 122b) comprising bilayered internal electrodes (121b-1, 121b-2, 122b-1, 122b-2) disposed adjacently to each other in the first direction with a second dielectric layer (111b) interposed therebetween, and wherein the number of the double internal electrodes (121b, 122b) is one.

2. The multilayer electronic component (100) according to claim 1, wherein the double internal electrode (121b, 122b) is disposed in a center portion of the body (110) in the first direction.

3. The multilayer electronic component (100) according to claim 1, wherein the second dielectric layer (111b) has a different composition from a composition of the first dielectric layers (111a).

4. The multilayer electronic component (100) according to claim 1, wherein when the number of pores per 1 µm2 included in a cross-section of the first dielectric layer (111a) is referred to as A, and the number of pores per 1 µm2 included in a cross-section of the second dielectric layer (111b) is referred to as B, B < A is satisfied.

5. The multilayer electronic component (100) according to claim 1, wherein when the number of pores per 1 µm2 included in a cross-section of the second dielectric layer (111b) is referred to as B, 1000 × B ≤ 5.00 is satisfied.

6. The multilayer electronic component (100) according to claim 1, wherein when an average size of the first dielectric layer (111a) in the first direction is referred to as td1 and an average size of the second dielectric layer (111b) in the first direction is referred to as td2, td2 < td1 is satisfied.

7. A multilayer electronic component (100), comprising:
a body (110) including a plurality of first dielectric layers (111a), internal electrodes (121, 122) including first and second internal electrodes (121, 122) spaced apart from each other on the same first dielectric layer (111a), and floating electrodes (123) alternately arranged with the internal electrodes (121, 122) in a first direction with the first dielectric layer (111a) interposed therebetween; and
first and second external electrodes (131, 132) disposed on the body (110) and connected to the first and second internal electrodes (121, 122), respectively,
**characterized in that** the body (110) includes a double floating electrode (123b) comprising bilayered floating electrodes (123b-1, 123b-2) disposed adjacently to each other in the first direction with a second dielectric layer (111b) interposed therebetween, and
the number of the double floating electrode (123b) is one.

8. The multilayer electronic component (100) according to claim 7, wherein the double floating electrode (123b) is disposed in a center portion of the body (110) in the first direction.

9. The multilayer electronic component (100) according to claim 7, wherein the second dielectric layer (111b) has a different composition from a composition of the first dielectric layer (111a).

10. The multilayer electronic component (100) according to claim 7, wherein when the number of pores per 1 µm2 included in a cross-section of the second dielectric layer (111b) is referred to as B, and the number of pores per 1 µm2 included in a cross-section of the first dielectric layer (111a) is referred to as A, B < A is satisfied.

11. The multilayer electronic component (100) according to claim 7, wherein when the number of pores per 1 µm2 included in a cross-section of the second dielectric layer (111b) is referred to as B, 1000 × B ≤ 5.00 is satisfied.

12. The multilayer electronic component (100) according to claim 7, wherein when an average size of the first dielectric layer (111a) in the first direction is referred to as td1 and an average size of the second dielectric layer (111b) in the first direction is referred to as td2, td2 < td1 is satisfied.

## Patentansprüche

1. Mehrschichtiges elektronisches Bauelement (100), umfassend:
einen Körper (110), der eine Mehrzahl erster Dielektrikumsschichten (111a), innere Elektroden, die erste und zweite innere Elektroden (121, 122) umfassen, welche auf derselben ersten Dielektrikumsschicht (111a) voneinander beabstandet angeordnet sind, sowie schwebende Elektroden (123) umfasst, die in einer ersten Richtung abwechselnd mit den inneren Elektroden (121, 122) angeordnet sind, wobei die erste Dielektrikumsschicht (111a) dazwischen angeordnet ist; und
erste und zweite äußere Elektroden (131, 132), die an dem Körper (110) angeordnet und jeweils mit den ersten bzw. zweiten inneren Elektroden (121, 122) verbunden sind,
**dadurch gekennzeichnet, dass**
der Körper (110) eine doppelte innere Elektrode (121b, 122b) umfasst, die zweilagige innere Elektroden (121b-1, 121b-2, 122b-1, 122b-2) aufweist, welche in der ersten Richtung benachbart zueinander angeordnet sind, wobei eine zweite Dielektrikumsschicht (111b) dazwischen angeordnet ist, und dass die Anzahl der doppelten inneren Elektroden (121b, 122b) eins beträgt.

2. Mehrschichtiges elektronisches Bauelement (100) nach Anspruch 1, wobei die doppelte innere Elektrode (121b, 122b) in einem mittleren Abschnitt des Körpers (110) in der ersten Richtung angeordnet ist.

3. Mehrschichtiges elektronisches Bauelement (100) nach Anspruch 1, wobei die zweite Dielektrikumsschicht (111b) eine von der Zusammensetzung der ersten Dielektrikumsschichten (111a) verschiedene Zusammensetzung aufweist.

4. Mehrschichtiges elektronisches Bauelement (100) nach Anspruch 1, wobei, wenn die Anzahl der in einem Querschnitt der ersten Dielektrikumsschicht (111a) enthaltenen Poren pro 1 µm² als A bezeichnet wird und die Anzahl der in einem Querschnitt der zweiten Dielektrikumsschicht (111b) enthaltenen Poren pro 1 µm² als B bezeichnet wird, gilt: B < A.

5. Mehrschichtiges elektronisches Bauelement (100) nach Anspruch 1, wobei, wenn die Anzahl der in einem Querschnitt der zweiten Dielektrikumsschicht (111b) enthaltenen Poren pro 1 µm² als B bezeichnet wird, gilt: 1000 × B ≤ 5,00.

6. Mehrschichtiges elektronisches Bauelement (100) nach Anspruch 1, wobei, wenn die mittlere Dicke der ersten Dielektrikumsschicht (111a) in der ersten Richtung als td1 und die mittlere Dicke der zweiten Dielektrikumsschicht (111b) in der ersten Richtung als td2 bezeichnet werden, gilt: td2 < td1.

7. Mehrschichtiges elektronisches Bauelement (100), umfassend:
einen Körper (110), der eine Mehrzahl erster Dielektrikumsschichten (111a), innere Elektroden (121, 122), die erste und zweite innere Elektroden (121, 122) umfassen, welche auf derselben ersten Dielektrikumsschicht (111a) voneinander beabstandet angeordnet sind, sowie schwebende Elektroden (123) umfasst, die in einer ersten Richtung abwechselnd mit den inneren Elektroden (121, 122) angeordnet sind, wobei die erste Dielektrikumsschicht (111a) dazwischen angeordnet ist; und
erste und zweite äußere Elektroden (131, 132), die an dem Körper (110) angeordnet und jeweils mit den ersten bzw. zweiten inneren Elektroden (121, 122) verbunden sind,
**dadurch gekennzeichnet, dass**
der Körper (110) eine doppelte schwebende Elektrode (123b) umfasst, die zweilagige schwebende Elektroden (123b-1, 123b-2) aufweist, welche in der ersten Richtung benachbart zueinander angeordnet sind, wobei eine zweite Dielektrikumsschicht (111b) dazwischen angeordnet ist, und dass die Anzahl der doppelten schwebenden Elektrode (123b) eins beträgt.

8. Mehrschichtiges elektronisches Bauelement (100) nach Anspruch 7, wobei die doppelte schwebende Elektrode (123b) in einem mittleren Abschnitt des Körpers (110) in der ersten Richtung angeordnet ist.

9. Mehrschichtiges elektronisches Bauelement (100) nach Anspruch 7, wobei die zweite Dielektrikumsschicht (111b) eine von der Zusammensetzung der ersten Dielektrikumsschicht (111a) verschiedene Zusammensetzung aufweist.

10. Mehrschichtiges elektronisches Bauelement (100) nach Anspruch 7, wobei, wenn die Anzahl der in einem Querschnitt der zweiten Dielektrikumsschicht (111b) enthaltenen Poren pro 1 µm² als B bezeichnet wird und die Anzahl der in einem Querschnitt der ersten Dielektrikumsschicht (111a) enthaltenen Poren pro 1 µm² als A bezeichnet wird, gilt: B < A.

11. Mehrschichtiges elektronisches Bauelement (100) nach Anspruch 7, wobei, wenn die Anzahl der in einem Querschnitt der zweiten Dielektrikumsschicht (111b) enthaltenen Poren pro 1 µm² als B bezeichnet wird, gilt: 1000 × B ≤ 5,00.

12. Mehrschichtiges elektronisches Bauelement (100) nach Anspruch 7, wobei, wenn die mittlere Dicke der ersten Dielektrikumsschicht (111a) in der ersten Richtung als td1 und die mittlere Dicke der zweiten Dielektrikumsschicht (111b) in der ersten Richtung als td2 bezeichnet werden, gilt: td2 < td1.

## Revendications

1. Composant électronique multicouche (100), comprenant :
un corps (110) comprenant une pluralité de premières couches diélectriques (111a), des électrodes internes comprenant des première et seconde électrodes internes (121, 122) espacées l'une de l'autre sur la même première couche diélectrique (111a), et des électrodes flottantes (123) disposées en alternance avec les électrodes internes (121, 122) dans une première direction, la première couche diélectrique (111a) étant interposée entre celles-ci ; et
des première et seconde électrodes externes (131, 132) disposées sur le corps (110) et reliées respectivement aux première et seconde électrodes internes (121, 122),
**caractérisé en ce que** le corps (110) comprend une double électrode interne (121b, 122b) comprenant des électrodes internes bicouches (121b-1, 121b-2, 122b-1, 122b-2) disposées de manière adjacente les unes aux autres dans la première direction, une seconde couche diélectrique (111b) étant interposée entre celles-ci, et dans lequel le nombre des doubles électrodes internes (121b, 122b) est égal à un.

2. Composant électronique multicouche (100) selon la revendication 1, dans lequel la double électrode interne (121b, 122b) est disposée dans une partie centrale du corps (110) dans la première direction.

3. Composant électronique multicouche (100) selon la revendication 1, dans lequel la seconde couche diélectrique (111b) présente une composition différente de la composition de la première couche diélectrique (111a).

4. Composant électronique multicouche (100) selon la revendication 1, dans lequel, lorsque A désigne le nombre de pores par 1 µm² inclus dans la section transversale de la première couche diélectrique (111a) et B désigne le nombre de pores par 1 µm² inclus dans la section transversale de la seconde couche diélectrique (111b), la condition B < A est satisfaite.

5. Composant électronique multicouche (100) selon la revendication 1, dans lequel, lorsque B désigne le nombre de pores par 1 µm² inclus dans la section transversale de la seconde couche diélectrique (111b), la condition 1000 × B ≤ 5,00 est satisfaite.

6. Composant électronique multicouche (100) selon la revendication 1, dans lequel, lorsque td1 désigne la taille moyenne de la première couche diélectrique (111a) dans la première direction et td2 désigne la taille moyenne de la seconde couche diélectrique (111b) dans la première direction, la condition td2 < td1 est satisfaite.

7. Composant électronique multicouche (100), comprenant :
un corps (110) comprenant une pluralité de premières couches diélectriques (111a), des électrodes internes (121, 122) comprenant des première et seconde électrodes internes (121, 122) espacées l'une de l'autre sur la même première couche diélectrique (111a), et des électrodes flottantes (123) agencées en alternance avec les électrodes internes (121, 122) dans une première direction, la première couche diélectrique (111a) étant interposée entre celles-ci ; et
des première et seconde électrodes externes (131, 132) disposées sur le corps (110) et reliées respectivement aux première et seconde électrodes internes (121, 122),
**caractérisé en ce que** le corps (110) comprend une double électrode flottante (123b) comprenant des électrodes flottantes bicouches (123b-1, 123b-2) disposées de manière adjacente les unes aux autres dans la première direction, une seconde couche diélectrique (111b) étant interposées entre celles-ci, et
le nombre de la double électrode flottante (123b) est égal à un.

8. Composant électronique multicouche (100) selon la revendication 7, dans lequel la double électrode flottante (123b) est disposée dans une partie centrale du corps (110) dans la première direction.

9. Composant électronique multicouche (100) selon la revendication 7, dans lequel la seconde couche diélectrique (111b) présente une composition différente de la composition de la première couche diélectrique (111a).

10. Composant électronique multicouche (100) selon la revendication 7, dans lequel, lorsque B désigne le nombre de pores par 1 µm² inclus dans la section transversale de la seconde couche diélectrique (111b) et A désigne le nombre de pores par 1 µm² inclus dans la section transversale de la première couche diélectrique (111a), la condition B < A est satisfaite.

11. Composant électronique multicouche (100) selon la revendication 7, dans lequel, lorsque B désigne le nombre de pores par 1 µm² inclus dans la section transversale de la seconde couche diélectrique (111b), la condition 1000 × B ≤ 5,00 est satisfaite.

12. Composant électronique multicouche (100) selon la revendication 7, dans lequel lorsque td1 désigne la taille moyenne de la première couche diélectrique (111a) dans la première direction et td2 désigne la taille moyenne de la seconde couche diélectrique (111b) dans la première direction, la condition td2 < td1 est satisfaite.
